# EUROPÄISCHE PATENTSCHRIFT

(11) **EP 1 986 898 B1**
(45) Veröffentlichungstag und Bekanntmachung des Hinweises auf die Patenterteilung: **02.03.2011**
(21) Anmeldenummer: 06819962.9
(22) Anmeldetag: 18.12.2006
(51) Int. Cl.: B60S 1/40

(54) **VERBINDUNGSSTÜCK ZUM VERBINDEN EINES WISCHBLATTS MIT EINEM WISCHERARM**
CONNECTING ELEMENT FOR CONNECTING A WIPER BLADE TO A WIPER ARM
ÉLÉMENT DE LIAISON POUR RELIER UN BALAI D'ESSUIE-GLACE AVEC UN BRAS D'ESSUIE-GLACE

(30) Priorität: 13.02.2006 DE 102006006434
(43) Veröffentlichungstag der Anmeldung: 05.11.2008
(73) Patentinhaber: Robert Bosch GmbH, 70442 Stuttgart (DE)
(72) Erfinder: OP'T ROODT, Inigo, B-3500 Hasselt (BE); BEELEN, Hans, B-3540 Herk De Stad (BE); VAN BAELEN, David, B-3020 Herent (BE)
(86) Internationale Anmeldenummer: PCT/EP2006/069835
(87) Internationale Veröffentlichungsnummer: WO 2007/093243

(56) Entgegenhaltungen:
- EP-A2- 1 184 239
- WO-A-01/15945
- WO-A-2005/102802
- DE-A1- 19 745 846
- FR-A3- 2 501 135

## Beschreibung

### Stand der Technik

Die Erfindung betrifft ein Verbindungsstück gemäß dem Oberbegriff des Anspruchs 1.

Ein derartiges Verbindungsstück ist beispielsweise aus der DE 10 2004 019 541 A1 bekannt. Mittels des Verbindungsstücks wird ein Wischerarm mit einer Anschlussvorrichtung mit Gelenkachse verbunden, die wiederum mit Hilfe von Krallen an dem Wischblatt befestigt wird. Der Wischerarm wird mit seinem hakenförmigen Anschlussabschnitt auf das Verbindungsstück aufgeschoben, so dass die beiden gegenüberliegenden Schenkel des hakenförmigen Anschlussabschnitts an zwei beabstandeten Anlageflächen des Verbindungsstücks anliegen. Das bekannte Verbindungsstück weist eine obere, eine untere sowie eine mittlere Anlagefläche auf, wobei die mittlere und die untere Anlagefläche alternativ zur Anlage eines Schenkels genutzt werden, je nachdem, ob die Schenkel des hakenförmigen Anschlussabschnitts einen großen oder einen kleinen lichten Abstand zueinander aufweisen. Die untere Anlagefläche ist an einem unteren Anlageabschnitt angeordnet, wobei der untere Anlageabschnitt federnd gelagert ist, um den Anpressdruck an den hakenförmigen Anschlussabschnitt des Wischerarms zu erhöhen. Das bekannte, als Spritzgussteil gefertigte Verbindungsstück ist äußerst filigran ausgebildet, wodurch aufwändige und teure Spritzgusswerkzeuge benötigt werden.

Ein gattunsgsgemäßes Verbindungsstück ist aus der FR-A-2501135 bekannt.

Die WO 01/15945 A1 offenbart ein Verbindungsstück zum Verbinden eines Wischblatts mit einem Wischerarm. Das Verbindungsstück weist Seitenwände auf, die eine obere Anlagefläche und eine untere Anlagefläche seitlich begrenzen. Die beiden Anlageflächen liegen parallel zueinander. In das Verbindungsstück ist eine offene Nabe zur Aufnahme einer Gelenkachse eingebracht. In die Seitenwände sind schräg verlaufende Schlitze eingebracht, wodurch eine blattfederartige Struktur erreicht wird, so dass die untere Anlagefläche nachgiebig ausgebildet ist.

Aus der DE 199 41 499 A1 ist ein weiteres Verbindungsstück bekannt, wobei zusätzlich zu dem federnden unteren Anlageabschnitt eine Reihe von weiteren federnden Elementen vorgesehen sind, was negative Auswirkungen auf die Fertigungskosten und auf die Stabilität des Verbindungsstücks hat. Bei dem bekannten Verbindungsstück sind eine Vielzahl von Anlageflächen in unterschiedlichen Abständen zueinander vorgesehen, um die Kompatibilität zu einer Vielzahl unterschiedlicher Wischerarme zu gewährleisten.

### Aufgabe und Vorteile der Erfindung

Der Erfindung liegt die Aufgabe zugrunde, mit einfachen Mitteln ein äußerst stabiles Verbindungsstück vorzuschlagen.

Diese Aufgabe wird mit den Merkmalen des Anspruchs 1 gelöst.

Vorteilhafte Weiterbildungen der Erfindung sind in den Unteransprüchen angegeben.

Der Erfindung liegt der Gedanke zugrunde, die obere und die untere Anlagefläche für die beiden Schenkel eines hakenförmigen Anschlussabschnitts eines Wischerarms in einem festen, unveränderlichen Abstand zueinander anzuordnen. Auf eine federnde Lagerung eines der die Anlageflächen tragenden Anlageabschnitts wird bewusst verzichtet, so dass ein entlang einer Hochachse starres Bauteil entsteht. Überraschenderweise hat die starre Ausbildung des Verbindungsstücks in dem Bereich zwischen den beiden Anlageflächen keine negativen Auswirkungen auf die Festigkeit der Verbindung zwischen Verbindungsstück und Wischerarm. Bei Bedarf wird der Abstand zwischen den beiden Anlageflächen derart gewählt, dass dieser geringfügig größer ist als der lichte Abstand zwischen den beiden gegenüberliegenden Schenkeln des hakenförmigen Anschlussabschnitts des Wischerarms. In diesem Fall wird die klemmende Verbindung allein durch den in gewissen Grenzen elastischen hakenförmigen Anschlussabschnitt und nicht durch elastische Abschnitte des Verbindungsstücks gewährleistet. Das erfindungsgemäße Verbindungsstück ist aufgrund der starren Ausbildung äußerst stabil, was sich positiv auf die Lebensdauer des Verbindungsstücks auswirkt. Ferner ist es nicht notwendig, federnde Abschnitte mit filigranen Bereichen mit dünner Materialstärke vorzusehen. Hierdurch ist es möglich, zur Fertigung des erfindungsgemäßen Verbindungsstücks auf wesentlich einfacher gestaltete Spritzgusswerkzeuge zurückzugreifen.

In Weiterbildung der Erfindung ist mit Vorteil vorgesehen, dass der untere Anlageabschnitt, vorzugsweise mitsamt unterer Anlagefläche, den oberen Anlageabschnitt in Richtung hinterem Ende des Verbindungsstücks überragt. Da das Verbindungsstück im montierten Zustand seitlich in einer Anschlussvorrichtung zur Befestigung an einem Wischerblatt oder unmittelbar in einem Wischerblatt aufgenommen ist, wird durch die Verlängerung des unteren Anlageabschnitts die Seitenführung wesentlich verbessert und somit das seitliche Spiel reduziert. Hierdurch kann Materialermüdungserscheinungen vorgebeugt werden. Weiterhin wird die Geräuschentwicklung während des Wischerbetriebs reduziert und das Wischerblatt exakter geführt.

Zur Gewährleistung einer ausreichenden Stabilität bei maximaler Materialeinsparung ist mit Vorteil vorgesehen, dass der obere Anlageabschnitt über vorzugsweise drei in Längsrichtung des Verbindungsstücks zueinander beabstandete Streben bzw. Querwände verbunden ist. Bevorzugt hat die vorderste Strebe dabei eine Doppelfunktion. Zum einen stützt sie den oberen Anlageabschnitt gegen den unteren Anlageabschnitt ab und zum anderen bildet sie die hintere Seitenwand einer nach unten offenen Nabe zur Aufnahme einer Gelenkachse des Wischerblatts oder einer Gelenkachse einer an dem Wischerblatt zu befestigenden Anschlussvorrichtung.

Neben der unteren und der oberen Anlagefläche sind bevorzugt keine weiteren zu diesen parallele Anlageflächen vorgesehen, wodurch sämtliche Streben in Längsrichtung ohne Durchgangsöffnungen zum Hindurchführen eines Schenkels des hakenförmigen Anschlussabschnitts des Wischerarms ausgebildet sein können, wodurch wiederum die Stabilität des Verbindungsstücks erhöht wird.

Erfindungsgemäß ist mindestens eine in Querrichtung des Verbindungsstücks verlaufende Durchgangsöffnung vorgesehen, wobei im Bereich der Durchgangsöffnung Material bei den das Verbindungsstück seitlich begrenzenden Seitenwangen eingespart werden kann. Im hinteren Bereich ist bevorzugt eine sich von der vorderen Strebe bis zur hinteren Strebe erstreckende Durchgangsöffnung in Querrichtung vorgesehen, wobei diese Durchgangsöffnung bevorzugt durch die mittlere Strebe in zwei Teildurchgangsöffnungen aufgeteilt ist. Zusätzlich kann im vorderen Bereich eine von einem vorderen Anlageabschnitt sowie von der zweiten Seitenwand der nach unten hin offenen Nabe begrenzte Durchgangsöffnung in Querrichtung vorgesehen werden.

Um ein Ablösen des Verbindungsstücks von dem Wischerarm während des Betriebs zu vermeiden, sind am vorderen Ende des Verbindungsstücks zwei parallele in Querrichtung federnde Seitenflügel mit je mindestens einem innen liegenden Rastabschnitt vorgesehen. Bei der Montage des Verbindungsstücks an dem Wischerarm geben die Seitenflügel nach außen elastisch nach, so dass der Anschlussabschnitt die Rastabschnitte passieren kann. Am Ende der Montage nehmen die Seitenflügel ihre Ausgangsposition wieder ein, wobei die Rastnasen die Montageposition des hakenförmigen Anschlussabschnitts sichern.

### Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung des Verbindungsstücks von schräg hinten,
- Fig. 2: eine perspektivische Darstellung des Verbindungsstücks von schräg vorne,
- Fig. 3: das Verbindungsstück in einer Seitenansicht,
- Fig. 4: eine Draufsicht auf das Verbindungsstück und
- Fig. 5: eine perspektivische Schnittdarstellung des Verbindungsstücks entlang der Schnittlinie A-A gemäß Fig. 4.

### Ausführungsbeispiel

In den Figuren sind gleiche Bauteile und Bauteile mit gleicher Funktion mit den gleichen Bezugszeichen gekennzeichnet.

Das in den Figuren gezeigte Verbindungsstück 1 dient zur Befestigung eines Wischerblatts an einem Wischerarm. Dabei wird zunächst das Verbindungsstück 1 auf einer Gelenkachse montiert. Diese Gelenkachse kann Bestandteil des Wischerblatts selbst oder Bestandteil einer an dem Wischerblatt zu montierenden Anschlussvorrichtung sein. Nach diesem Montageschritt wird ein hakenförmiger Anschlussabschnitt auf das Verbindungsstück 1 aufgeschoben. In der DE 10 2004 019 541 A1 sind ein mit dem erfindungsgemäßen Verbindungsstück verwendbares Wischerblatt, ein Wischerarm und eine Anschlussvorrichtung gezeigt, so dass bezüglich einer detaillierten Beschreibung dieser bekannten Bauteile ausdrücklich auf die Ausführungen dieser Druckschrift, insbesondere auf die Figurenbeschreibung, verwiesen wird.

Das Verbindungsstück 1 weist zwei das Verbindungsstück seitlich begrenzende parallele Seitenwangen 2, 3, auf, die parallel zu einer gedachten Hochachse 4 verlaufen. Die Hochachse 4 schneidet eine Längsachse 5 im rechten Winkel. In einem 90°-Winkel zu der Hochachse 4 sowie zu der Längsachse 5 verläuft eine Querachse 6. In Querrichtung sind die Seitenwangen 2, 3 durch einen oberen entlang der Längsachse 5 verlaufenden Anlageabschnitt 7 mit einer oberen Anlagefläche 8 sowie durch einen unteren Anlageabschnitt 9 mit einer zur oberen Anlagefläche 8 parallelen unteren Anlagefläche 10 miteinander verbunden. Die Seitenwangen 2, 3 überragen die obere Anlagefläche 8 nach oben hin sowie die untere Anlagefläche 9 nach unten hin. Hierdurch bilden die Seitenwangen 2, 3 mit ihren Innenseiten Anlageflächen für die beiden gegenüberliegenden Schenkel des hakenförmigen Anschlussabschnitts des Wischerarms. Der obere und der untere Anlageabschnitt 7, 9 werden von je einem entlang der Längsachse 5 verlaufenden Steg gebildet.

Die obere und die untere, auf den Außenseiten der Abschlussabschnitte angeordneten Anlageflächen 8, 10 dienen zur Anlage an den Innenseiten der Schenkel des hakenförmigen Anschlussabschnitts des Wischerarms. Der Abstand zwischen der oberen Anlagefläche 8 und der unteren Anlagefläche 10 wird mit Vorteil, jedoch nicht zwingend, so gewählt, dass dieser größer ist als der lichte Abstand zwischen den beiden Schenkeln des hakenförmigen Anschlussabschnitts des Wischerarms. Auf seiner Unterseite weist das Verbindungsstück 1 eine nach unten offene, als Quernut ausgebildete Nabe 11 auf. Die Nabe 11 erstreckt sich über die gesamte Quererstreckung des Verbindungsstücks 1. In ihrem unteren Bereich weist die Nabe 11 einen sich nach oben hin verjüngenden Abschnitt 12 auf, der in seinem oberen Bereich in eine Aussparung 13 mit kreisförmiger Querschnittsfläche übergeht. Die Nabe 11 wird von zwei Streben 14, 15 begrenzt, die im oberen Bereich der Aussparung 13 bogenförmig zusammengeführt sind.

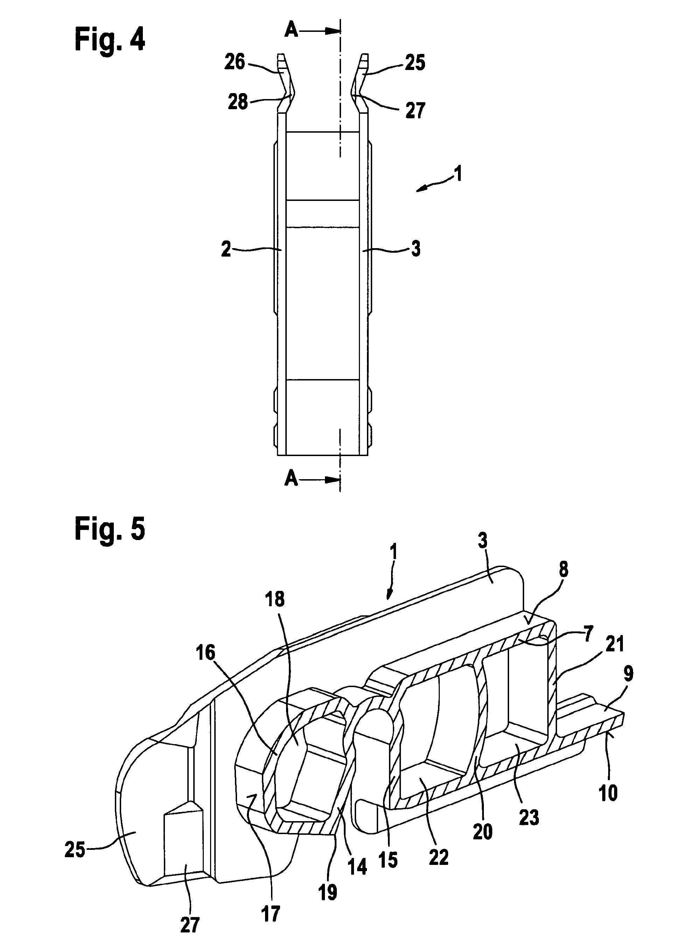

Insbesondere in Fig. 5 ist zu erkennen, dass in der Zeichnungsebene links von der Strebe 14 ein vorderer konvexer Anlageabschnitt 16 mit einer vorderen Anlagefläche 17 anschließt. Der vordere Anlageabschnitt 16 verbindet das obere und das untere Ende der Strebe 14. Die Strebe 14 begrenzt zusammen mit dem vorderen Anlageabschnitt 16 eine vordere in Querrichtung verlaufende erste Durchgangsöffnung 18. Die vordere Anlagefläche 17 zur Anlage des gekrümmten Abschnitts des hakenförmigen Anschlussabschnitts des Wischerarms fluchtet in ihrem oberen Bereich mit der in Längsrichtung dahinter angeordneten oberen Anlagefläche 8 und geht dann in einen im Wesentlichen konvex geformten Abschnitt über. Die untere Kante 19 des vorderen Anlageabschnitts 17 liegt im Wesentlichen in derselben Ebene wie die untere Anlagefläche 10. Der bogenförmige Anschlussabschnitt zwischen den beiden Streben 14, 15 ist gegenüber der oberen Anlagefläche 8 und dem oberen Abschnitt der vorderen Anlagefläche 17 nach unten versetzt angeordnet.

Der obere Anlageabschnitt 7 stützt sich gegenüber dem unteren Anlageabschnitt 9 über drei Streben 15, 20 und 21 ab, wobei die Strebe 15 gleichzeitig eine Seitenwand der Nabe 11 bildet.

Im hinteren Bereich des Verbindungsstücks 1 sind eine zweite und eine dritte in Querrichtung verlaufende Durchgangsöffnung 22, 23 gebildet. Die zweite Durchgangsöffnung wird auf der Oberseite von dem oberen Anlageabschnitt 7, auf der Unterseite von dem unteren Anlageabschnitt 9 und seitlich von den beabstandeten Streben 15, 20 begrenzt. Die Strebe 20 bildet gleichzeitig die Abgrenzung zur dritten, hinteren Durchgangsöffnung 23, welche zusätzlich von dem oberen Anlageabschnitt 7 sowie dem unteren Anlageabschnitt 9 und der Strebe 21 begrenzt ist. Sämtliche Streben 14, 15, 20 und 21 weisen in Längsrichtung keine Durchgangsöffnungen auf, wodurch die Stabilität des Verbindungsstücks 1 erhöht wird. Durch die drei Streben 15, 20, 21 sind der obere Anlageabschnitt 7 mit oberer Anlagefläche 8 und der untere Anlageabschnitt 9 mit unterer Anlagefläche 10 starr in Hochrichtung gegeneinander abgestützt.

Der untere Anlageabschnitt 9 mit unterer Anlagefläche 10 ist nach hinten über die Strebe 21 hinaus verlängert, ebenso die Seitenwangen 2, 3. Die Länge dieses überstehenden Abschnitts 30 entspricht etwa der Hälfte der Länge des oberen Anlageabschnitts 7. Da die Seitenwangen 2, 3 seitlich in einem Wischerblatt oder einer Anschlussvorrichtung abgestützt sind, ist die Seitenführung des Verbindungsstücks verbessert. Ebenso ist die Seitenführung des zwischen den Seitenwangen 2, 3 aufgenommenen Wischerarms verbessert.

An den Außenflächen der Seitenwangen 2, 3 befinden sich jeweils erhabene, ringförmige Anlaufrippen 24, konzentrisch zur Mitte der kreisförmigen Aussparung 13 der Nabe 11. Jeweils eine Anlaufrippe 24a wird von der Strebe 20 gebildet. Hierzu ist die Strebe 20 teilkreisförmig konzentrisch zum Mittelpunkt der Aussparung 13 der Nabe 11 ausgeformt.

Im vorderen Bereich weist das Verbindungsstück 1 zwei parallele Seitenflügel 25, 26 auf. Diese sind entlang der Querachse 6 federnd ausgebildet und weisen innen liegend jeweils einen Rastabschnitt 27, 28 auf, wobei die sich gegenüberliegenden Rastabschnitte 27, 28 nach innen hin erhaben ausgebildet sind und somit auf den gekrümmten Abschnitt des hakenförmigen Anschlussabschnitts des Wischerarms wirken und diesen in seiner Montageposition halten.

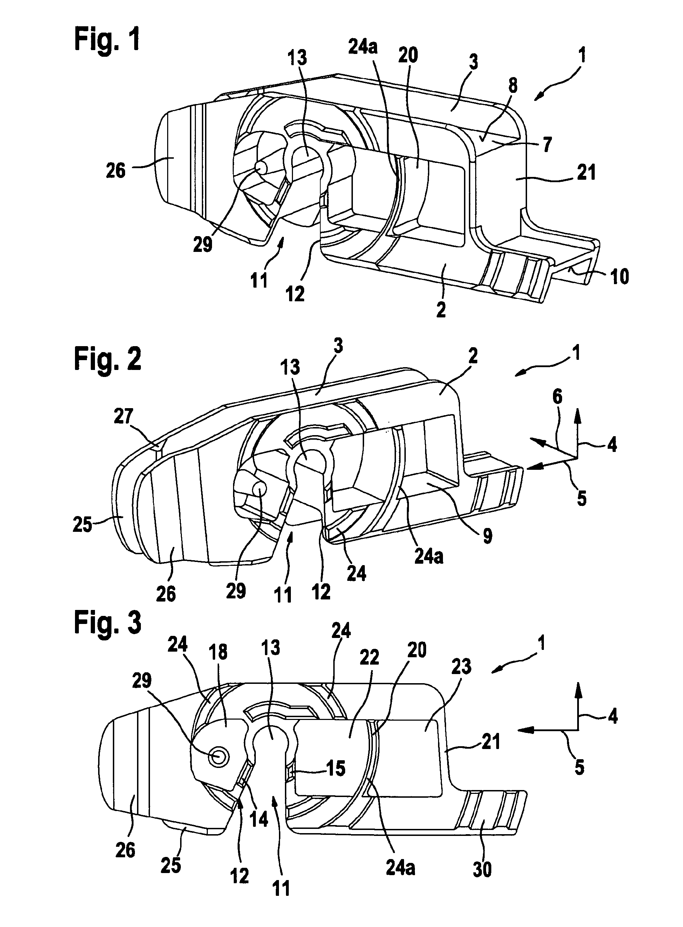

In den Fig. 1 bis 3 ist in der ersten Durchgangsöffnung eine Anspritznase 29 vom Anspritzvorgang gezeigt. Diese kann bei Bedarf entfernt werden.

## Patentansprüche

1. Verbindungsstück zum Verbinden eines Wischblatts mit einem Wischerarm, mit einer offenen Nabe zur Aufnahme einer Gelenkachse, und mit einem oberen Anlageabschnitt (7) mit einer oberen Anlagefläche (8) und mit einem unteren Anlageabschnitt (9) mit einer zur oberen Anlagefläche (8) zumindest näherungsweise parallelen unteren Anlagefläche (10) zur Anlage an den Innenseiten von zwei gegenüberliegenden Schenkeln eines hakenförmigen Anschlussabschnitts eines Wischerarms, wobei der obere und der untere Anlageabschnitt (7, 9) starr miteinander verbunden sind, und
der obere Anlageabschnitt (7) und der untere Anlageabschnitt (9) mittels mehrerer beabstandeter Streben (15, 20, 21) miteinander verbunden sind, **dadurch gekennzeichnet, dass** zwischen den Streben in Querrichtung verlaufende Durchgangsöffnungen (22, 23) angeordnet sind, die von jeweils zwei Streben (15, 20, 21) sowie von dem oberen und dem unteren Anlageabschnitt (7, 9) begrenzt sind, wobei eine Strebe (15) eine Wand der Nabe (11) bildet.

2. Verbindungsstück nach Anspruch 1,
**dadurch gekennzeichnet,**
**dass** das Verbindungsstück (1) in seinem vorderen Bereich einen vorderen Anlageabschnitt (16) mit einer konvexen, vorderen Anlagefläche (17) für den gekrümmten Abschnitt des hakenförmigen Anschlussabschnitts des Wischerarms aufweist, und dass der untere Anlageabschnitt (7) den oberen Anlageabschnitt (9) im hinteren Bereich des Verbindungsstücks (1) überragt.

3. Verbindungsstück nach Anspruch 2,
**dadurch gekennzeichnet,**
**dass** die Länge des den oberen Anlageabschnitt (7) überragenden Teilabschnitts (30) des unteren Anlageabschnitts (9) mindestens 25% der Länge des oberen Anlageabschnitts (7) beträgt.

4. Verbindungsstück nach einem der Ansprüche 1 bis 3,
**dadurch gekennzeichnet,**
**dass** der obere Anlageabschnitt (7) und der untere Anlageabschnitt (9) mittels dreier starrer, beabstandeter Streben (15, 20, 21) miteinander verbunden sind.

5. Verbindungsstück nach einem der Ansprüche 1 bis 5,
**dadurch gekennzeichnet,**
**dass** zwei parallele Seitenwangen (2, 3) vorgesehen sind, die die obere und die untere Anlagefläche (8, 10) zwischen sich aufnehmen, und dass die Seitenwangen (2, 3) die obere Anlagefläche (8), vorzugsweise über ihre gesamte Längserstreckung, nach oben hin überragen, und dass die Seitenwangen die untere Anlagefläche (10), vorzugsweise über ihre gesamte Längserstreckung, nach unten hin überragen.

6. Verbindungsstück nach Anspruch einem der Ansprüche 1 bis 6,
**dadurch gekennzeichnet,**
**dass** das Verbindungsstück (1) am vorderen Ende zwei parallele, in Querrichtung federnde Seitenflügel (25, 26) mit je mindestens einem Rastabschnitt (27, 28) aufweist.

7. Verbindungsstück nach einem der Ansprüche 1 bis 7,
**dadurch gekennzeichnet,**
**dass** seitliche Anlaufrippen (24, 24a) vorgesehen sind, und dass eine Anlaufrippe (24a) von einer, vorzugsweise gebogenen, Strebe (15, 20, 21) gebildet ist.

## Claims

1. Connecting element for connecting a wiper blade to a wiper arm, with an open hub for receiving a hinge pin, and with an upper bearing section (7) having an upper bearing surface (8) and with a lower bearing section (9) having a lower bearing surface (10) at least approximately parallel to the upper bearing surface (8), for bearing against the inner sides of two opposite limbs of a hook-shaped connecting section of a wiper arm, wherein the upper and the lower bearing sections (7, 9) are connected rigidly to each other, and the upper bearing section (7) and the lower bearing section (9) are connected to each other by means of a plurality of spaced-apart struts (15, 20, 21), **characterized in that** passage openings (22, 23) running in the transverse direction are arranged between the struts, said passage openings being bounded by in each case two struts (15, 20, 21) and by the upper and the lower bearing sections (7, 9), with one strut (15) forming a wall of the hub (11).

2. Connecting element according to Claim 1, **characterized in that** the front region of the connecting element (1) has a front bearing section (16) having a convex, front bearing surface (17) for the curved section of the hook-shaped connecting section of the wiper arm, and **in that** the lower bearing section (7) protrudes over the upper bearing section (9) in the rear region of the connecting element (1).

3. Connecting element according to Claim 2, **characterized in that** the length of that subsection (30) of the lower bearing section (9) which protrudes over the upper bearing section (7) is at least 25% of the length of the upper bearing section (7).

4. Connecting element according to one of Claims 1 to 3, **characterized in that** the upper bearing section (7) and the lower bearing section (9) are connected to each other by means of three rigid, spaced-apart struts (15, 20, 21).

5. Connecting element according to one of Claims 1 to 4, **characterized in that** two parallel side cheeks (2, 3) are provided, the side cheeks accommodating the upper and the lower bearing surfaces (8, 10) therebetween, and **in that** the side cheeks (2, 3) protrude upwards over the upper bearing surface (8), preferably over the entire longitudinal extent thereof, and **in that** the side cheeks protrude downwards over the lower bearing surface (10), preferably over the entire longitudinal extent thereof.

6. Connecting element according to one of Claims 1 to 5, **characterized in that** the connecting element (1), has, at the front end, two parallel side wings (25, 26) which are spring-mounted in the transverse direction, each having at least one latching section (27, 28).

7. Connecting element according to one of Claim 1 to 6, **characterized in that** lateral run-on ribs (24, 24a) are provided, and **in that** one run-on rib (24a) is formed by a preferably bent strut (15, 20, 21).

## Revendications

1. Elément de liaison pour relier un balai d'essuie-glace à un bras d'essuie-glace, comprenant un moyeu ouvert pour recevoir un axe d'articulation, une portion d'appui supérieure (7) avec une surface d'appui supérieure (8) et une portion d'appui inférieure (9) avec une surface d'appui inférieure (10) au moins approximativement parallèle à la surface d'appui supérieure (8), pour l'appui contre les côtés intérieurs de deux branches opposées d'une portion de raccordement en forme de crochet d'un bras d'essuie-glace, la portion d'appui supérieure et la portion d'appui inférieure (7, 9) étant connectées rigidement l'une à l'autre, et la portion d'appui supérieure (7) et la portion d'appui inférieure (9) étant connectées l'une à l'autre au moyen de plusieurs entretoises espacées (15, 20, 21), **caractérisé en ce qu'**entre les entretoises sont disposées des ouvertures de passage (22, 23) s'étendant dans la direction transversale, lesquelles sont limitées à chaque fois par deux entretoises (15, 20, 21) et par la portion d'appui supérieure et la portion d'appui inférieure (7, 9), une entretoise (15) formant une paroi du moyeu (11).

2. Elément de liaison selon la revendication 1,
**caractérisé en ce que**
l'élément de liaison (1) présente, dans sa région avant, une portion d'appui avant (16) avec une surface d'appui avant convexe (17) pour la portion courbe de la portion de raccordement en forme de crochet du bras d'essuie-glace, et **en ce que** la portion d'appui inférieure (9) dépasse de la portion d'appui supérieure (7) dans la région arrière de l'élément de liaison (1).

3. Elément de liaison selon la revendication 2,
**caractérisé en ce que**
la longueur de la portion partielle (30) de la portion d'appui inférieure (9) dépassant de la portion d'appui supérieure (7) vaut au moins 25% de la longueur de la portion d'appui supérieure (7).

4. Elément de liaison selon l'une quelconque des revendications 1 à 3,
**caractérisé en ce que**
la portion d'appui supérieure (7) et la portion d'appui inférieure (9) sont connectées l'une à l'autre au moyen de trois entretoises rigides espacées (15, 20, 21).

5. Elément de liaison selon l'une quelconque des revendications 1 à 4,
**caractérisé en ce que**
deux joues latérales parallèles (2, 3) sont prévues, lesquelles reçoivent entre elles la surface d'appui supérieure et la surface d'appui inférieure (8, 10), et **en ce que** les joues latérales (2, 3) dépassent de la surface d'appui supérieure (8), vers le haut, de préférence sur toute leur étendue longitudinale, et **en ce que** les joues latérales dépassent de la surface d'appui inférieure (10), vers le bas, de préférence sur toute leur étendue longitudinale.

6. Elément de liaison selon l'une quelconque des revendications 1 à 5,
**caractérisé en ce que**
l'élément de liaison (1) présente à l'extrémité avant deux ailes latérales parallèles, élastiques dans la direction transversale (25, 26), avec à chaque fois au moins une portion d'encliquetage (27, 28).

7. Elément de liaison selon l'une quelconque des revendications 1 à 6,
**caractérisé en ce que**
des nervures de butée latérales (24, 24a) sont prévues, et **en ce qu'**une nervure de butée (24a) est formée par une entretoise (15, 20, 21), de préférence cintrée.
